# EUROPEAN PATENT SPECIFICATION

(11) **EP 4 729 909 B1**
(45) Date of publication and mention of the grant of the patent: **19.08.2026**
(21) Application number: 25201914.6
(22) Date of filing: 12.09.2025
(51) Int. Cl.: G01L 5/28, B60T 7/16, B60W 30/09, G01M 17/007, G01S 17/931, G08G 1/16

(54) **SYSTEM AND METHOD FOR DEACTIVATING THE COLLISION AVOIDANCE FUNCTION OF A VEHICLE**
SYSTEM UND VERFAHREN ZUR DEAKTIVIERUNG DER KOLLISIONSVERMEIDUNGSFUNKTION EINES FAHRZEUGS
SYSTÈME ET PROCÉDÉ POUR LA DÉSACTIVATION LA FONCTION D'ÉVITEMENT DE COLLISION D'UN VÉHICULE

(30) Priority: 21.10.2024 JP 2024184573
(43) Date of publication of application: 22.04.2026
(73) Proprietor: TOYOTA JIDOSHA KABUSHIKI KAISHA, Toyota-shi, Aichi-ken 471-8571 (JP)
(72) Inventor: SAWANO, Takuro, Toyota-shi, 471-8571 (JP); KOIDE, Toshihiro, Toyota-shi, 471-8571 (JP); NAGAFUCHI, Yuhei, Toyota-shi, 471-8571 (JP)
(74) Representative: J A Kemp LLP

(56) References cited:
- CN-A- 107 415 915
- DE-A1- 102015 011 498
- KR-A- 20230 148 395

## Description

### CROSS REFERENCE TO RELATED APPLICATIONS

This application claims priority to Japanese Patent Application No. 2024-184573, filed October 21, 2024.

### BACKGROUND

### FIELD

The present disclosure relates to a system and a method.

There is known a vehicle that activates an automatic brake when a distance to an obstacle detected by an in-vehicle sensor is short (for example, Japanese Patent Application Publication No. 2012-071676).

A vehicle is caused to run near an inspection device to inspect the vehicle. However, in a case where the vehicle has a collision avoidance function such as an automatic brake, the inspection device is detected as an obstacle, and then the collision avoidance function activates, and obstructs running of the vehicle.

In the prior art, KR 2023 0148395 discloses a vehicle inspection device for performing an automatic braking performance test of a vehicle including a LIDAR sensor for obstacle detection, the vehicle inspection device comprising a set of mirrors arranged on top of the inspection device components in order to prevent the LIDAR sensor from triggering the vehicle's automatic braking system due to the presence of the inspection device components adjacent to the vehicle.

### SUMMARY

The present disclosure can be implemented as following aspects.
(1) A first aspect according to the present disclosure provides a system. This system includes: a first acquisition unit that acquires reliability of a first sensor that is a sensor mounted on a vehicle having a collision avoidance function of avoiding collision against an obstacle based on a distance between the vehicle and the obstacle, and detects the distance between the vehicle and the obstacle; a second acquisition unit that acquires reliability of a second sensor that is a sensor disposed outside the vehicle, and detects a distance between the vehicle and an inspection device that inspects the vehicle; and a function stop instruction unit that, when a predetermined condition including that the reliability of the first sensor is lower than the reliability of the second sensor is satisfied, transmits to the vehicle an instruction of stopping the collision avoidance function that uses a detection result of the first sensor.

The system according to this aspect can stop the collision avoidance function that uses the detection result of the first sensor when the reliability of the second sensor is higher than the reliability of the first sensor. Consequently, when the vehicle is caused to run near the inspection device, the collision avoidance function that uses the detection result of the first sensor activates, so that it is possible to suppress obstruction of running of the vehicle.

(2) A second aspect according to the present disclosure provides a system. This system includes: a first acquisition unit that acquires a detection range of a first sensor that is a sensor mounted on a vehicle having a collision avoidance function of avoiding collision against an obstacle based on a distance between the vehicle and the obstacle, and detects the distance between the vehicle and the obstacle; a second acquisition unit that acquires a detection range of a second sensor that is a sensor disposed outside the vehicle, and detects a distance between the vehicle and an inspection device that inspects the vehicle; and a function stop instruction unit that, when a predetermined condition including that an overlapping portion of the detection range of the first sensor included in the detection range of the second sensor has been specified is satisfied, transmits to the vehicle an instruction of stopping at at least the overlapping portion the collision avoidance function that uses a detection result of the first sensor.

The system according to this aspect can stop the collision avoidance function that uses the detection result of the first sensor at the overlapping portion. Consequently, the collision avoidance function that uses the detection result of the first sensor activates at the overlapping portion, so that, when the vehicle is caused to run near the inspection device, it is possible to suppress obstruction of running of the vehicle.

(3) The system according to the above aspect includes: a collision prediction unit that predicts collision of the vehicle and the inspection device using a detection result of the second sensor; and a collision avoidance instruction unit that, when the collision prediction unit predicts that the vehicle and the inspection device collide, transmits an instruction of causing at least one of the vehicle and the inspection device to execute a collision avoidance behavior of avoiding the collision of the vehicle and the inspection device.

Even when the collision avoidance function that uses the detection result of the first sensor mounted on the vehicle is stopping, the system according to this aspect can cause the vehicle to execute the collision avoidance behavior using the detection result of the second sensor located outside the vehicle.

(4) **In** the system according to the above system, the function stop instruction unit may stop the collision avoidance function that uses the detection result of the first sensor by overwriting a necessity/unnecessity determination result of the collision avoidance behavior of the vehicle that uses the first sensor with a necessity/unnecessity determination result of the collision avoidance behavior that uses the second sensor.

The system according to this aspect can stop the collision avoidance function of the vehicle that uses the detection result of the first sensor by overwriting the necessity/unnecessity determination result, and can lift stop of the collision avoidance function of the vehicle that uses the detection result of the first sensor by stopping overwriting the necessity/unnecessity determination result.

(5) A third aspect according to the present disclosure provides a method. This method includes: acquiring reliability of a first sensor that is a sensor mounted on a vehicle having a collision avoidance function of avoiding collision against an obstacle based on a distance between the vehicle and the obstacle, and detects the distance between the vehicle and the obstacle; acquiring reliability of a second sensor that is a sensor disposed outside the vehicle, and detects a distance between the vehicle and an inspection device that inspects the vehicle; and when a predetermined condition including that the reliability of the first sensor is lower than the reliability of the second sensor is satisfied, transmitting to the vehicle an instruction of stopping the collision avoidance function that uses a detection result of the first sensor.

The method according to this aspect can stop the collision avoidance function that uses the detection result of the first sensor when the reliability of the second sensor is higher than the reliability of the first sensor. Consequently, when the vehicle is caused to run near the inspection device, the collision avoidance function that uses the detection result of the first sensor activates, so that it is possible to suppress obstruction of running of the vehicle.

(6) A fourth aspect according to the present disclosure provides a method. This method includes: acquiring a detection range of a first sensor that is a sensor mounted on a vehicle having a collision avoidance function of avoiding collision against an obstacle based on a distance between the vehicle and the obstacle, and detects the distance between the vehicle and the obstacle; acquiring a detection range of a second sensor that is a sensor disposed outside the vehicle, and detects a distance between the vehicle and an inspection device that inspects the vehicle; and when a predetermined condition including that an overlapping portion of the detection range of the first sensor included in the detection range of the second sensor has been specified is satisfied, transmitting to the vehicle an instruction of stopping at at least the overlapping portion the collision avoidance function that uses a detection result of the first sensor.

The method according to this aspect can stop the collision avoidance function that uses the detection result of the first sensor at the overlapping portion. Consequently, the collision avoidance function that uses the detection result of the first sensor activates at the overlapping portion, so that, when the vehicle is caused to run near the inspection device, it is possible to suppress obstruction of running of the vehicle.

The present disclosure can be also implemented by various aspects other than the systems and the methods. For example, the present disclosure can be implemented as, for example, aspects such as a vehicle, a server device, an inspection device, a computer program, and a recording medium having this computer program recorded thereon.

### BRIEF DESCRIPTION OF THE DRAWINGS

FIG. 1 is an explanatory view illustrating a configuration of a system according to a first embodiment;
FIG. 2 is an explanatory view illustrating a configuration of a vehicle according to the first embodiment;
FIG. 3 is an explanatory view illustrating a configuration of a server device according to the first embodiment;
FIG. 4 is an explanatory view illustrating a configuration of an inspection device according to the first embodiment;
FIG. 5 is an explanatory view illustrating that a vehicle runs under remote control;
FIG. 6 is a flowchart illustrating a processing procedure of running control of the vehicle according to the first embodiment;
FIG. 7 is an explanatory view illustrating how automatic brake prohibition control is performed according to the first embodiment;
FIG. 8 is a flowchart illustrating processing contents of automatic brake prohibition control according to the first embodiment;
FIG. 9 is an explanatory view schematically illustrating that an automatic brake necessity/unnecessity determination result is overwritten;
FIG. 10 is an explanatory view illustrating that automatic brake prohibition control is performed according to a second embodiment;
FIG. 11 is an explanatory view illustrating a configuration of the inspection device according to a third embodiment;
FIG. 12 is an explanatory view illustrating an overlapping portion of detection ranges of sensors;
FIG. 13 is an explanatory view illustrating a configuration of a vehicle according to a fourth embodiment; and
FIG. 14 is a flowchart illustrating a processing procedure of running control of the vehicle according to the fourth embodiment.

### DETAILED DESCRIPTION

### A. First Embodiment:

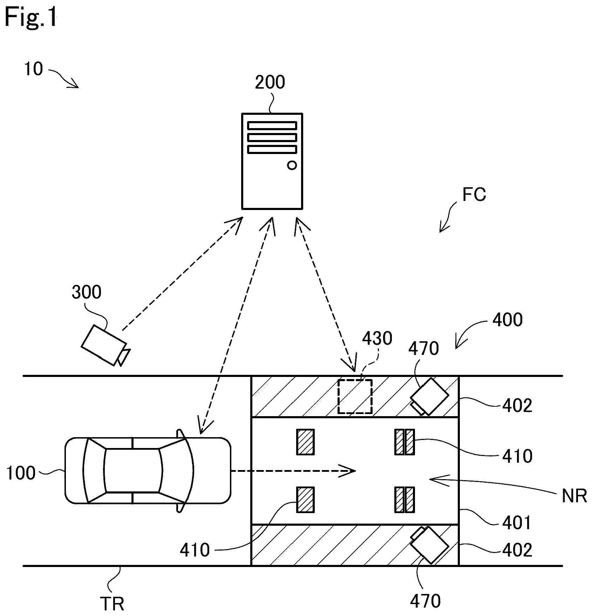

FIG. 1 is an explanatory view illustrating a configuration of a system 10 according to the first embodiment. The system 10 includes a vehicle 100, a server device 200, an external sensor 300, and an inspection device 400. In the present embodiment, the system 10 is used in a factory FC that manufactures the vehicles 100. Note that the system 10 may be used not in the factory FC that manufactures the vehicles 100, but in, for example, a factory that repairs the vehicles 100 or a factory that maintains the vehicles 100.

In the present embodiment, the vehicle 100 is a four-wheeled Battery Electric Vehicle (BEV). The vehicle 100 may be a passenger car, or may be a bus or a truck. A driving method of the vehicle 100 may be front wheel driving, or may be rear wheel driving or four wheel driving. Note that the vehicle 100 is not limited to an electric vehicle, and may be, for example, a gasoline car, a hybrid car, a fuel cell car, or the like. The vehicle 100 is not limited to four wheels, and may be, for example, three wheels, six wheels, or the like.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

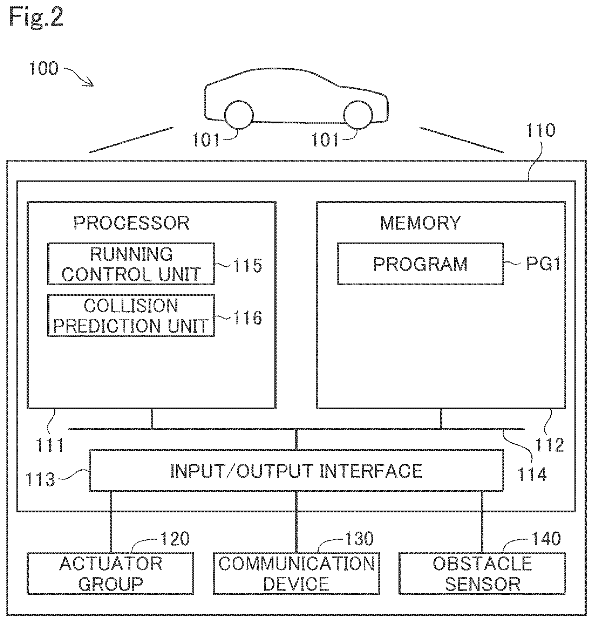

FIG. 2 is an explanatory view illustrating a configuration of the vehicle 100. In the present embodiment, the vehicle 100 includes four wheels 101. The vehicle 100 is configured to be able to run under remote control. The vehicle 100 includes a vehicle control device 110 that controls each unit of the vehicle 100, an actuator group 120 that is driven under control of the vehicle control device 110, a communication device 130 for communicating with an outside, and an obstacle sensor 140 for detecting distances to obstacles located around the vehicle 100. The actuator group 120 includes an actuator of a driving device that produces a driving force of the vehicle 100, an actuator of a steering device that changes a traveling direction of the vehicle 100, and an actuator of a braking device that produces a braking force of the vehicle 100.

The obstacle sensor 140 includes, for example, a camera, a millimeter wave radar, a LiDAR, or a combination thereof. Examples of obstacles detected by the obstacle sensor 140 include various equipment of the factory FC including the inspection device 400, and workers at the factory FC. In the present embodiment, the obstacle sensor 140 corresponds to a "first sensor" according to the present disclosure.

The vehicle control device 110 is configured as a computer that includes a processor 111, a memory 112, an input/output interface 113, and an internal bus 114. The processor 111, the memory 112, and the input/output interface 113 are connected to enable bidirectional communication via the internal bus 114. The input/output interface 113 is connected with the actuator group 120, the communication device 130, and the obstacle sensor 140. The communication device 130 communicates with the server device 200 and the inspection device 400 by wireless communication.

The processor 111 functions as a running control unit 115 and a collision prediction unit 116 by executing a computer program PG1 stored in advance in the memory 112.

The running control unit 115 can cause the vehicle 100 to run by controlling the actuator group 120 in response to a passenger's operation when the passenger is in the vehicle 100. The running control unit 115 can cause the vehicle 100 to run by controlling the actuator group 120 using a running control signal received from the server device 200 irrespectively of whether or not the passenger is in the vehicle 100. The running control signal is a control signal for controlling running of the vehicle 100. In the present embodiment, the running control signal includes an acceleration and a steering angle of the vehicle 100 as parameters. Note that the running control signal may include the speed of the vehicle 100 as a parameter instead of the acceleration of the vehicle 100 or in addition to the acceleration of the vehicle 100.

The collision prediction unit 116 predicts whether or not the vehicle 100 and an obstacle collide when the obstacle sensor 140 detects the obstacle. The collision prediction unit 116 predicts that the vehicle 100 and the obstacle collide when a distance between the vehicle 100 and the obstacle is equal to a predetermined threshold or less. The running control unit 115 causes the vehicle 100 to execute a collision avoidance behavior of avoiding collision against the obstacle by controlling the actuator group 120 when the collision prediction unit 116 predicts that the vehicle 100 and the obstacle collide. In other words, the vehicle 100 autonomously executes the collision avoidance behavior when collision of the obstacle detected by the obstacle sensor 140 and the vehicle 100 is predicted. The collision avoidance behavior is execution of, for example, emergency stop, change of the traveling direction, or both of emergency stop and change of the traveling direction. In the present embodiment, the running control unit 115 causes the vehicle 100 to perform emergency stop by controlling the actuator of the braking device when collision of the obstacle detected by the obstacle sensor 140 and the vehicle 100 is predicted. In the present disclosure, a function of the vehicle 100 of autonomously executing a collision avoidance behavior based on a distance between the vehicle 100 and the obstacle may be referred to as a collision avoidance function. A function of the vehicle 100 of autonomously executing emergency stop based on a distance between the vehicle 100 and the obstacle may be referred to as an emergency stop function or an automatic brake. When the automatic brake activates, the vehicle 100 performs emergency stop irrespectively of the running control signal received from the server device 200.

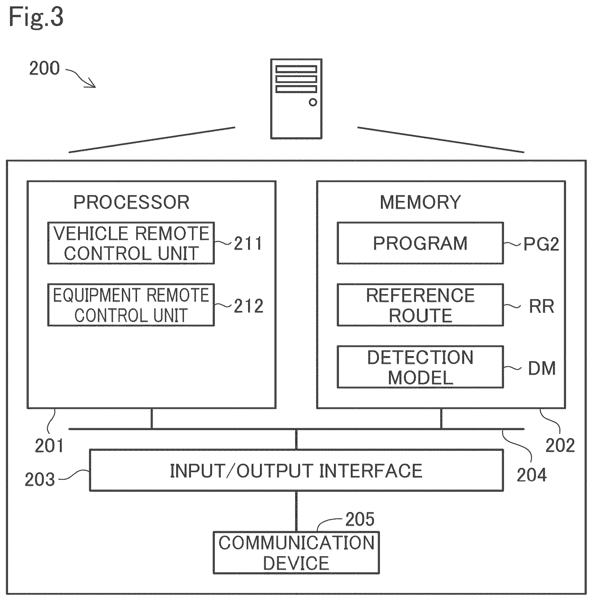

FIG. 3 is an explanatory view illustrating a configuration of the server device 200. The server device 200 is located outside the vehicle 100. The server device 200 is configured as a computer that includes a processor 201, a memory 202, an input/output interface 203, and an internal bus 204. The processor 201, the memory 202, and the input/output interface 203 are connected to enable bidirectional communication via the internal bus 204. The input/output interface 203 is connected with the communication device 205 that communicates with the outside. In the present embodiment, the communication device 205 communicates with the vehicle 100 by wireless communication, and communicates with the external sensor 300 and the inspection device 400 by wired communication or wireless communication.

The processor 201 functions as a vehicle remote control unit 211 that remotely controls the vehicle 100, and an equipment remote control unit 212 that remotely controls the inspection device 400 by executing a computer program PG2 stored in advance in the memory 202.

The vehicle remote control unit 211 remotely controls the vehicle 100 by transmitting to the vehicle 100 the running control signal that is a control signal for controlling running of the vehicle 100. The equipment remote control unit 212 remotely controls the inspection device 400 by transmitting to the inspection device 400 an inspection control signal that is a control signal for controlling an operation of the inspection device 400. The server device 200 includes the vehicle remote control unit 211 and the equipment remote control unit 212, so that it is possible to cause the vehicle 100 and the inspection device 400 to work together.

As illustrated in FIG. 1, the external sensor 300 is located outside the vehicle 100. The external sensor 300 is used to detect a position of the vehicle 100. In the present embodiment, the external sensor 300 is a camera that is provided to the factory FC. The external sensor 300 includes an unillustrated communication device, and communicates with the server device 200 by wired communication or wireless communication.

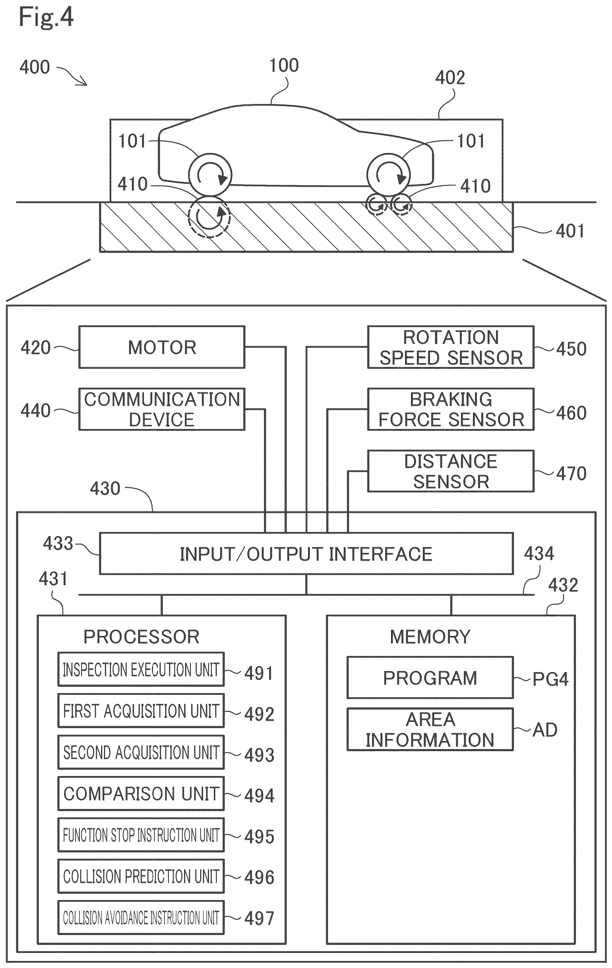

FIG. 4 is an explanatory view illustrating a configuration of the inspection device 400. The inspection device 400 is equipment that inspects the vehicle 100. In the present embodiment, the inspection device 400 includes a stage 401, racks 402, rollers 410 that are provided to the stage 401, motors 420 that rotate the rollers 410, an inspection control device 430 that controls each unit of the inspection device 400, a communication device 440 that communicates with the outside, a rotation speed sensor 450 that detects the rotation speeds of the rollers 410, a braking force sensor 460 that detects the braking force of the vehicle 100 to be applied to the rollers 410, and distance sensors 470 that detect distances to the vehicle 100.

As illustrated in FIG. 1, the stage 401 is installed on a floor surface of the factory FC. In the present embodiment, the vehicle 100 is inspected on the stage 401. The racks 402 are disposed on both sides of the stage 401. In the present embodiment, the racks 402 store various devices such as the inspection control device 430. A narrow route NR is formed between the racks 402. The narrow route NR is a passage that the vehicle 100 can pass yet is narrow. The vehicle 100 to be inspected by the inspection device 400 passes the narrow route NR.

As illustrated in FIG. 4, the rollers 410 are installed at the stage 401. The rollers 410 are configured to be able to rotate while supporting the wheels 101. In the present embodiment, the inspection device 400 is configured to support one front wheel with two small-diameter rollers, and support one rear wheel with one large-diameter roller. That is, in the present embodiment, the inspection device 400 includes the six rollers 410. The small-diameter roller is the roller 410 having a small diameter, and the large-diameter roller is the roller 410 having a large diameter. The inspection device 400 includes the plurality of motors 420. The plurality of motors 420 are disposed at the stage 401. The plurality of motors 420 include the motor 420 that rotates the rollers 410 for front wheels, and the motor 420 that rotates the rollers 410 for rear wheels. Note that the inspection device 400 may be configured to support one front wheel with one large-diameter roller, and support one rear wheel with two small-diameter rollers. The inspection device 400 may be configured to support one front wheel with two small-diameter rollers, and support one rear wheel with two small-diameter rollers.

The inspection control device 430 is configured as a computer that includes a processor 431, a memory 432, an input/output interface 433, and an internal bus 434. The processor 431, the memory 432, and the input/output interface 433 are connected to enable bidirectional communication via the internal bus 434. The input/output interface 433 is connected with the motors 420, the communication device 440, the rotation speed sensor 450, the braking force sensor 460, and the distance sensors 470. In the present embodiment, the communication device 440 communicates with the vehicle 100 by wireless communication, and communicates with the server device 200 by wired communication or wireless communication.

The distance sensor 470 detects a distance between the vehicle 100 and the inspection device 400. In the present embodiment, the two distance sensors 470 are provided, one of the distance sensors 470 detects a distance between a left side surface of the vehicle 100 and the rack 402 on the left side, the other distance sensor 470 detects a distance between a right side surface of the vehicle 100 and the rack 402 on the right side. Examples of the distance sensors 470 are cameras, LiDARs, millimeter wave radars, or laser displacement meters. In the present embodiment, the distance sensors 470 correspond to "second sensors" according to the present disclosure.

The processor 431 functions as an inspection execution unit 491, a first acquisition unit 492, a second acquisition unit 493, a comparison unit 494, a function stop instruction unit 495, a collision prediction unit 496, and a collision avoidance instruction unit 497 by executing a computer program PG4 stored in advance in the memory 432.

The inspection execution unit 491 executes inspection of the vehicle 100. In the present embodiment, the inspection execution unit 491 executes inspection of the vehicle 100 according to an inspection control signal received from the server device 200. The inspection execution unit 491 executes control of the motors 420, detection of a rotation speed by the rotation speed sensor 450, and detection of the braking force by the braking force sensor 460 at a time of inspection of the vehicle 100. In the present embodiment, the inspection device 400 has a function as a drum tester that inspects the driving device or the like of the vehicle 100 by causing the rollers 410 to rotate by being driven by driving and rotating the wheels 101, and a function as a brake tester that inspects the braking device or the like of the vehicle 100 by causing the wheels 101 to rotate by being driven by driving and rotating the rollers 410. In this regard, the inspection device 400 may not have one of the function as the drum tester and the function as the brake tester. In a case where the inspection device 400 does not have the function as the brake tester, the inspection device 400 may not include the motors 420 and the braking force sensor 460.

The first acquisition unit 492 acquires reliability of the obstacle sensor 140 mounted on the vehicle 100 that passes the narrow route NR. The second acquisition unit 493 acquires reliabilities of the distance sensors 470 disposed outside the vehicle 100. The comparison unit 494 compares the reliability of the obstacle sensor 140 and the reliabilities of the distance sensors 470. The reliability of a sensor is the degree of accuracy of a detection result of the sensor. In a case of a sensor that detects a distance, as reliability of the sensor is higher, a distance resolution of the sensor is higher. In a case where, for example, a sensor that detects a distance is a camera, as a resolution is higher, the reliability of the sensor is higher, and the distance resolution of the sensor is higher. In a case where a sensor that detects a distance is a LiDAR, as the density of a point cloud is higher, the reliability of the sensor is higher. In the present embodiment, information indicating a distance resolution of the obstacle sensor 140 is stored in advance in the memory 112 of the vehicle control device 110, and information indicating distance resolutions of the distance sensors 470 is stored in advance in the memory 432 of the inspection control device 430. The first acquisition unit 492 acquires the distance resolution of the obstacle sensor 140, in other words, the reliability of the obstacle sensor 140 from the information indicating the distance resolution of the obstacle sensor 140 received from the vehicle 100. The second acquisition unit 493 acquires the distance resolutions of the distance sensors 470, in other words, the reliabilities of the distance sensors 470 from the information indicating the distance resolutions of the distance sensors 470 acquired from the memory 432. Note that, in a case where the information indicating the distance resolution of the obstacle sensor 140 is stored in advance in the memory 202 of the server device 200 instead of the memory 112 of the vehicle control device 110, the first acquisition unit 492 may acquire the distance resolution of the obstacle sensor 140 from the information indicating the distance resolution of the obstacle sensor 140 received from the server device 200. Furthermore, the first acquisition unit 492 may acquire the distance resolution of the obstacle sensor 140 from a detection result of the obstacle sensor 140, or the second acquisition unit 493 may acquire the distance resolutions of the distance sensors 470 from detection results of the distance sensors 470.

When acquiring from the comparison unit 494 a determination result indicating that the reliabilities of the distance sensors 470 are higher than the reliability of the obstacle sensor 140, the function stop instruction unit 495 stops the collision avoidance function of the vehicle 100 by transmitting to the vehicle 100 an instruction of stopping the collision avoidance function of the vehicle 100. When the collision avoidance function of the vehicle 100 stops, it is not possible to execute the autonomous collision avoidance behavior of the vehicle 100 that uses the detection result of the obstacle sensor 140. In the present embodiment, when acquiring from the comparison unit 494 a determination result indicating that the reliabilities of the distance sensors 470 are higher than the reliability of the obstacle sensor 140, the function stop instruction unit 495 disables execution of the automatic brake of the vehicle 100 by transmitting to the vehicle 100 an automatic brake prohibition signal that is a control signal that disables activation of the automatic brake of the vehicle 100 that uses the detection result of the obstacle sensor 140. In the present embodiment, the automatic brake prohibition signal is an instruction of stopping the collision avoidance function of the vehicle 100. The automatic brake of the vehicle 100 having received the automatic brake prohibition signal temporarily stops activating.

The collision prediction unit 496 predicts whether or not the vehicle 100 and the inspection device 400 collide using the detection results of the distance sensors 470. In the present embodiment, collision of the vehicle 100 and the inspection device 400 includes collision of the vehicle 100 and the racks 402. In this regard, in the present embodiment, collision of the vehicle 100 and the inspection device 400 does not include such collision that the vehicle 100 gets on the stage 401 or the roller 410.

The collision avoidance instruction unit 497 transmits a collision avoidance control signal to the vehicle 100 when the collision prediction unit 496 predicts that the vehicle 100 and the inspection device 400 collide. The collision avoidance control signal is a control signal for causing the vehicle 100 to execute the collision avoidance behavior. The vehicle 100 having received the collision avoidance control signal executes the collision avoidance behavior even when the collision avoidance function is stopping. In the present embodiment, the collision avoidance instruction unit 497 causes the vehicle 100 to execute emergency stop that is the collision avoidance behavior.

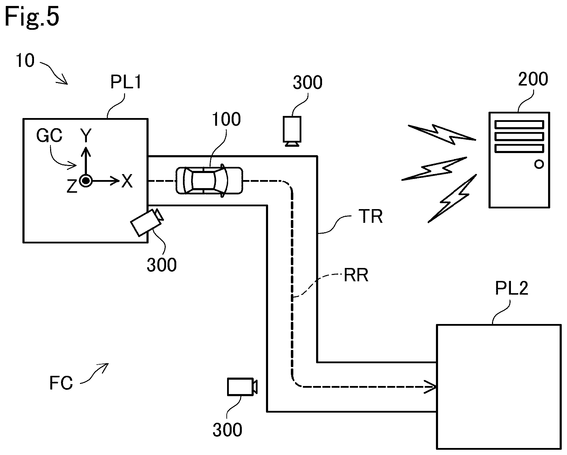

FIG. 5 is an explanatory view illustrating that the vehicle 100 runs under remote control in the factory FC. In the present embodiment, the system 10 is used in the factory FC that manufactures the vehicles 100. A reference coordinate system of the factory FC is a global coordinate system GC, and an arbitrary position in the factory FC can be expressed by coordinates of X, Y, and Z in the global coordinate system GC. The factory FC includes a first place PL1 and a second place PL2. The first place PL1 and the second place PL2 are connected by a track TR on which the vehicle 100 is able to run. In the factory FC, the plurality of the external sensors 300 are installed along the track TR. The position of each external sensor 300 in the factory FC is adjusted in advance.

In the present embodiment, the first place PL1 is a place at which the vehicle 100 is assembled. At a point of time at which the vehicle 100 is assembled at the first place PL1, at least the vehicle control device 110, the actuator group 120, and the communication device 130 are attached to the vehicle 100. Accordingly, the vehicle 100 is able to run under remote control at a point of time at which the vehicle 100 is assembled at the first place PL1. The vehicle 100 assembled at the first place PL1 is remotely controlled by the server device 200 to move from the first place PL1 to the second place PL2 through the track TR. The second place PL2 is a place at which the vehicle 100 is inspected. The inspection device 400 is disposed at the second place PL2. The vehicle 100 having passed the inspection at the second place PL2 is subsequently shipped from the factory FC.

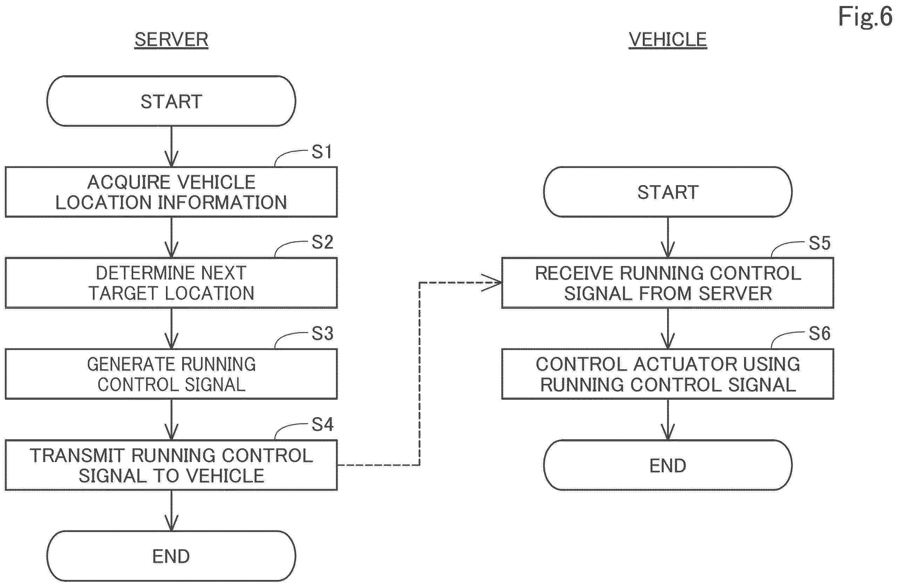

FIG. 6 is a flowchart illustrating a processing procedure of running control of the vehicle 100 according to the present embodiment. In step S1, the processor 201 of the server device 200 acquires vehicle location information using detection result output from an external sensor 300. The external sensor 300 is located outside the vehicle 100. The vehicle location information is locational information as a basis for generating a running control signal. In the present embodiment, the vehicle location information includes the location and orientation of the vehicle 100 in a reference coordinate system of the factory FC. In the present embodiment, the reference coordinate system of the factory FC is a global coordinate system GC and a location in the factory FC can be expressed by X, Y, and Z coordinates in the global coordinate system GC. In the present embodiment, the external sensor 300 is a camera that is disposed in the factory FC and outputs a captured image as detection result. In step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to the detection model DM using artificial intelligence, for example. The detection model DM is prepared in the system 10 or outside the system 10. The detection model DM is stored in advance in the memory 202 of the server device 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model DM and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 determines a target location to which the vehicle 100 is to move next. In the present embodiment, the target location is expressed by X, Y, and Z coordinates in the global coordinate system GC. The memory 202 of the server device 200 contains the reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 generates a running control signal for causing the vehicle 100 to run toward the determined target location. In the present embodiment, the running control signal includes an acceleration and a steering angle of the vehicle 100 as parameters. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle control device 110 receives the running control signal transmitted from the server device 200. In step S6, the processor 111 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 10 in the present embodiment, it becomes possible to move the vehicle 100 without using a transport unit such as a crane or a conveyor.

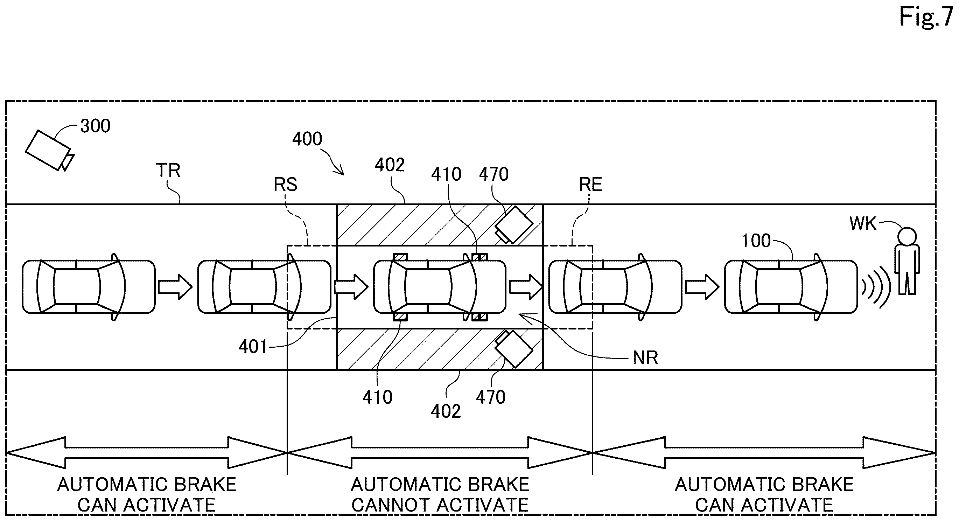

FIG. 7 is an explanatory view illustrating that the vehicle 100 is inspected by the inspection device 400. In the present embodiment, prior to inspection of the vehicle 100, the vehicle remote control unit 211 of the server device 200 remotely controls the vehicle 100 to cause the vehicle 100 to run onto the rollers 410, and cause the vehicle 100 to stop on the rollers 410.

At a time of driving inspection of inspecting the driving device of the vehicle 100, the vehicle remote control unit 211 causes the rollers 410 to rotate by being driven by driving and rotating the wheels 101 in a state where the wheels 101 are supported by the rollers 410. At the time of the driving inspection, since the circumferential speed of the wheels 101 that drive and rotate, and the circumferential speeds of the rollers 410 that rotate by being driven are the same, a longitudinal position of the vehicle 100 does not change. The vehicle remote control unit 211 remotely controls the vehicle 100 such that the rotation speeds of the wheels 101 reach a predetermined target rotation speed. The equipment remote control unit 212 detects the rotation speeds of the rollers 410 using the rotation speed sensor 450 by remotely controlling the inspection device 400. The vehicle remote control unit 211 stops rotation of the wheels 101 after the rotation speeds of the wheels 101 reach the predetermined target rotation speed. When the wheels 101 stop rotating, the rollers 410 stop rotating. The equipment remote control unit 212 generates a driving inspection result using a detection result of the rotation speeds of the rollers 410. The driving inspection result includes at least one of information related to whether or not the driving device of the vehicle 100 has correctly operated, and information related to whether or not a speed meter of the vehicle 100 indicates a correct value.

At a time of braking inspection of inspecting the braking device of the vehicle 100, the equipment remote control unit 212 causes the wheels 101 to rotate by being driven by driving and rotating the rollers 410 in a state where the wheels 101 are supported by the rollers 410. During the braking inspection, since the circumferential speeds of the rollers 410 that drive and rotate, and the circumferential speeds of the wheels 101 that rotate by being driven are the same, the longitudinal position of the vehicle 100 does not change. The equipment remote control unit 212 remotely controls the inspection device 400 such that the rotation speeds of the rollers 410 reach the predetermined target rotation speed. When the rotation speeds of the rollers 410 reach the target rotation speed, the vehicle remote control unit 211 causes the braking device of the vehicle 100 to activate by remotely controlling the vehicle 100, and the equipment remote control unit 212 stops transmission of the driving force from the motors 420 to the rollers 410. The equipment remote control unit 212 detects the braking force applied from the braking device of the vehicle 100 to the rollers 410 using the braking force sensor 460. The equipment remote control unit 212 generates a braking inspection result using a detection result of the braking force. The braking inspection result includes information related to whether or not the braking device of the vehicle 100 has correctly operated.

In the present embodiment, since the rollers 410 are disposed on the narrow route NR, the vehicle 100 that is an inspection target runs on the narrow route NR. When the vehicle 100 runs on the narrow route NR, a distance between the vehicle 100 and the rack 402 may become equal to or less than a distance at which the automatic brake of the vehicle 100 activates. Here, when the automatic brake of the vehicle 100 activates, the vehicle 100 is obstructed from running on the narrow route NR. To address this problem, in the present embodiment, the automatic brake prohibition control is executed to enable the vehicle 100 to smoothly run on the narrow route NR.

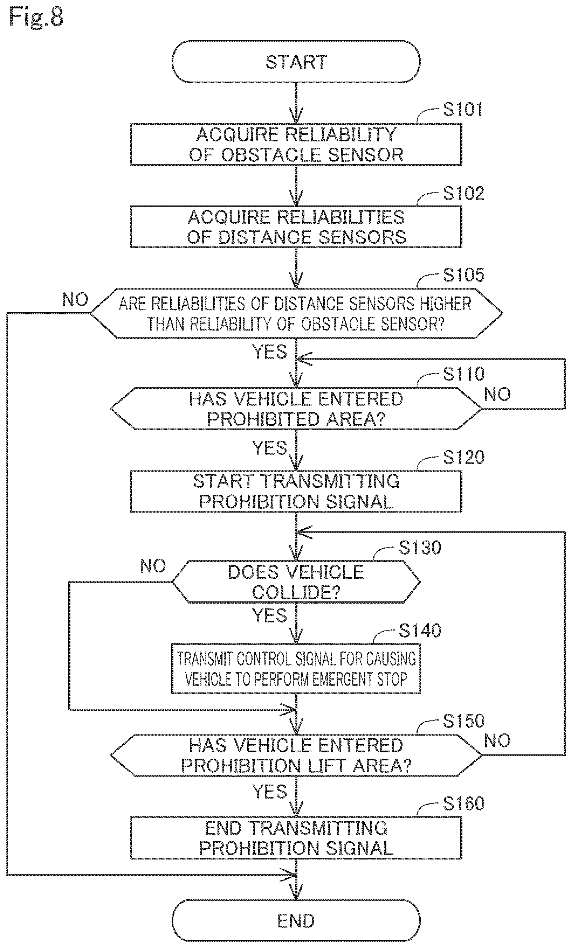

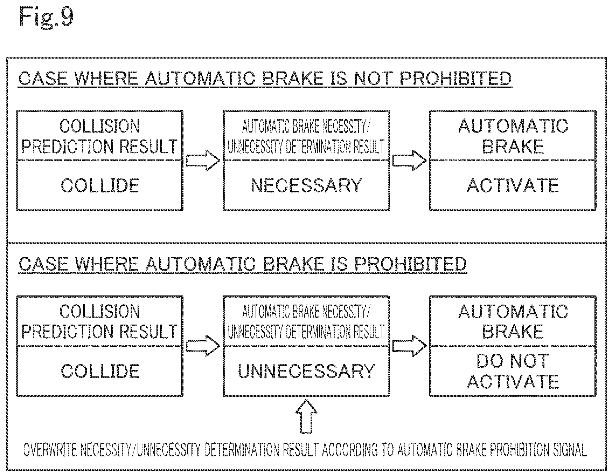

FIG. 8 is a flowchart illustrating processing contents of automatic brake prohibition control. FIG. 9 is an explanatory view schematically illustrating that an automatic brake necessity/unnecessity determination result is overwritten by automatic brake prohibition control. The automatic brake prohibition control illustrated in FIG. 8 is repeatedly executed by the processor 431 of the inspection control device 430.

When the automatic brake prohibition control starts, in step S101, the first acquisition unit 492 acquires the distance resolution of the obstacle sensor 140, in other words, the reliability of the obstacle sensor 140. In step S102, the second acquisition unit 493 acquires the distance resolutions of the distance sensors 470, in other words, the reliabilities of the distance sensors 470. In this regard, an order of step S101 and step S102 may be reverse to the above-described order. In step S105, the comparison unit 494 compares the reliability of the obstacle sensor 140 and the reliabilities of the distance sensors 470, and determines whether or not the reliabilities of the distance sensors 470 are higher than the reliability of the obstacle sensor 140. In a case where it has not been determined in step S105 that the reliabilities of the distance sensors 470 are higher than the reliability of the obstacle sensor 140, the comparison unit 494 ends the automatic brake prohibition control. By contrast with this, in a case where it has been determined in step S105 that the reliabilities of the distance sensors 470 are higher than the reliability of the obstacle sensor 140, the comparison unit 494 advances processing to step S110.

In step S110, the function stop instruction unit 495 determines whether or not the vehicle 100 has entered a predetermined prohibited area RS. In the present embodiment, the prohibited area RS is provided on the track TR on the front side of the narrow route NR. A current position of the vehicle 100 is grasped using vehicle position information acquired from the server device 200. Area information AD indicating a range of the prohibited area RS is stored in advance in the memory 432 of the inspection control device 430. The function stop instruction unit 495 determines whether or not the vehicle 100 has entered the predetermined prohibited area RS using the vehicle position information and the area information AD.

In a case where it has been determined in step S110 that the vehicle 100 has not entered the prohibited area RS, the function stop instruction unit 495 executes the processing in step S110 again. By contrast with this, in a case where it has been determined in step S110 that the vehicle 100 has entered the prohibited area RS, the function stop instruction unit 495 starts transmitting to the vehicle 100 an instruction of stopping the collision avoidance function of the vehicle 100 that uses the detection result of the obstacle sensor 140 in step S120. More specifically, the function stop instruction unit 495 starts transmitting the automatic brake prohibition signal to the vehicle 100. As illustrated in FIG. 9, in the present embodiment, while the automatic brake prohibition signal is transmitted, an automatic brake necessity/unnecessity determination result of the collision prediction unit 116 of the vehicle 100 is overwritten with a determination result of "unnecessary" by the automatic brake prohibition signal, and the automatic brake of the vehicle 100 cannot activate.

In step S130, the collision prediction unit 496 of the inspection control device 430 predicts whether or not the vehicle 100 and the inspection device 400 collide. In the present embodiment, the collision prediction unit 496 detects a distance between the vehicle 100 and the inspection device 400 using the distance sensors 470, and predicts that the vehicle 100 and the inspection device 400 collide when the detected distance is determined to be equal to the predetermined threshold or less.

In a case where it has been determined in step S130 that the vehicle 100 and the inspection device 400 collide, the collision avoidance instruction unit 497 transmits the collision avoidance control signal to the vehicle 100 in step S140. By contrast with this, in a case where it has been determined in step S130 that the vehicle 100 and the inspection device 400 do not collide, the collision avoidance instruction unit 497 skips the processing in step S140.

In step S150, the function stop instruction unit 495 determines whether or not the vehicle 100 has entered a predetermined prohibition lift area RE. In the present embodiment, the prohibition lift area RE is provided on the track TR on the depth side of the narrow route NR. In the present embodiment, the current position of the vehicle 100 is grasped using the vehicle position information acquired from the server device 200. The area information AD stored in the memory 432 of the inspection control device 430 indicates a range of the prohibition lift area RE. The function stop instruction unit 495 determines whether or not the vehicle 100 has entered the prohibition lift area RE using the vehicle position information acquired from the server device 200 and the area information AD.

In a case where it has been determined in step S150 that the vehicle 100 has not entered the prohibition lift area RE, the function stop instruction unit 495 returns the processing to step S130. By contrast with this, in a case where it has been determined in step S150 that the vehicle 100 has entered the prohibition lift area RE, the function stop instruction unit 495 ends transmitting the automatic brake prohibition signal in step S160. In the present embodiment, by ending transmitting the automatic brake prohibition signal, the automatic brake of the vehicle 100 can activate again. Subsequently, the equipment control device starts automatic brake prohibition control from step S110 again.

According to the system 10 according to the above-described present embodiment, when the vehicle 100 enters the narrow route NR of the inspection device 400, the inspection device 400 executes automatic brake prohibition control, so that execution of the automatic brake of the vehicle 100 that uses the obstacle sensor 140 is disabled. Consequently, activation of the automatic brake that uses the obstacle sensor 140 suppresses obstruction of entry of the vehicle 100 into the narrow route NR. Furthermore, in the present embodiment, after the vehicle 100 passes the narrow route NR, it is possible to execute again the automatic brake of the vehicle 100 that uses the obstacle sensor 140. Consequently, even when, for example, a worker WK rushes into the track TR as illustrated in FIG. 7, the automatic brake of the vehicle 100 activates, so that it is possible to avoid collision of the vehicle 100 and the worker WK.

Furthermore, in the present embodiment, while execution of the automatic brake of the vehicle 100 that uses the obstacle sensor 140 is disabled, the inspection device 400 detects a distance between the vehicle 100 and the inspection device 400 using the distance sensors 470, and causes the vehicle 100 to perform emergency stop by transmitting a collision avoidance signal when the distance detected by the distance sensors 470 is equal to the predetermined threshold or less. Consequently, it is possible to suppress collision of the vehicle 100 for which execution of the automatic brake is disabled, and the inspection device 400.

Furthermore, in the present embodiment, the inspection device 400 disables execution of the automatic brake of the vehicle 100 that uses the obstacle sensor 140 by transmitting the automatic brake prohibition signal to the vehicle 100 and overwriting the automatic brake necessity/unnecessity determination result of the vehicle 100. Consequently, by ending transmitting the automatic brake prohibition signal, the inspection device 400 can immediately return the automatic brake of the vehicle 100 that uses the obstacle sensor 140 to a state where the automatic brake can be executed.

### B. Second Embodiment:

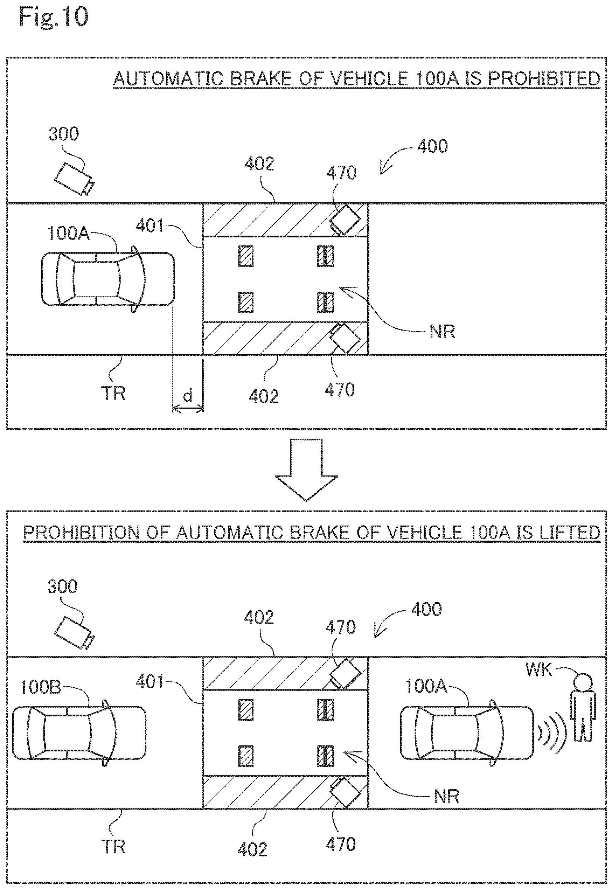

FIG. 10 is an explanatory view illustrating that the system 10 according to the second embodiment executes automatic brake prohibition control. The second embodiment differs from the first embodiment in contents of the automatic brake prohibition control. More specifically, the second embodiment differs from the first embodiment in that the prohibited area RS and the prohibition lift area RE are not provided. The other components are the same as those in the first embodiment unless otherwise specified in particular.

FIG. 10 illustrates two vehicles 100A and 100B. Configurations of the two vehicles 100A and 100B are the same as that of the vehicle 100 according to the first embodiment. The two vehicles 100A and 100B are inspected by the inspection device 400. After the vehicle 100A, the vehicle 100B is inspected by the inspection device 400. In the following description, in a case where the two vehicles 100A and 100B are not distinguished in particular, the two vehicles 100A and 100B will be referred to simply as the vehicle 100.

In the present embodiment, in step S110 of the automatic brake prohibition control illustrated in FIG. 8, the function stop instruction unit 495 determines whether or not a distance between the vehicle 100A that enters the inspection device 400, and the inspection device 400 is equal to a predetermined threshold d or less. In a case where it has been determined in step S110 that the distance between the vehicle 100A and the inspection device 400 is equal to the predetermined threshold d or less, the function stop instruction unit 495 starts transmitting a prohibition signal to the vehicle 100A in step S120. In a case where it has been determined in step S110 that the distance between the vehicle 100A and the inspection device 400 exceeds the predetermined threshold d, the function stop instruction unit 495 executes the processing in step S110 again.

In the present embodiment, in step S150 of the automatic brake prohibition control illustrated in FIG. 8, the function stop instruction unit 495 determines whether or not the vehicle 100B has been permitted to enter the inspection device 400. In the present embodiment, the function stop instruction unit 495 determines that the vehicle 100B has been permitted to enter the inspection device 400 when receiving a signal for permitting the vehicle 100B to enter the inspection device 400. The signal for permitting the vehicle 100B to enter the inspection device 400 is transmitted after the vehicle 100A leaves the inspection device 400. In a case where it has been determined in step S150 that the vehicle 100B has been permitted to enter the inspection device 400, the function stop instruction unit 495 ends transmitting the prohibition signal to the vehicle 100A in step S160.

The inspection device 400 according to the above-described present embodiment disables execution of the automatic brake that uses the obstacle sensors 140 of the vehicles 100A and 100B when the vehicles 100A and 100B enter the inspection device 400. Consequently, it is possible to suppress obstruction of entry of the vehicles 100A and 100B into the inspection device 400. Furthermore, in the present embodiment, after the vehicles 100A and 100B leave the inspection device 400, execution of the automatic brake of the vehicles 100A and 100B is returned to a state where the automatic brake is enabled. Consequently, when collision of the vehicles 100A and 100B having left the inspection device 400, and the worker WK is predicted, the automatic brakes of the vehicles 100A and 100B make it possible to avoid collision of the vehicles 100A and 100B and the worker WK.

### C. Third Embodiment:

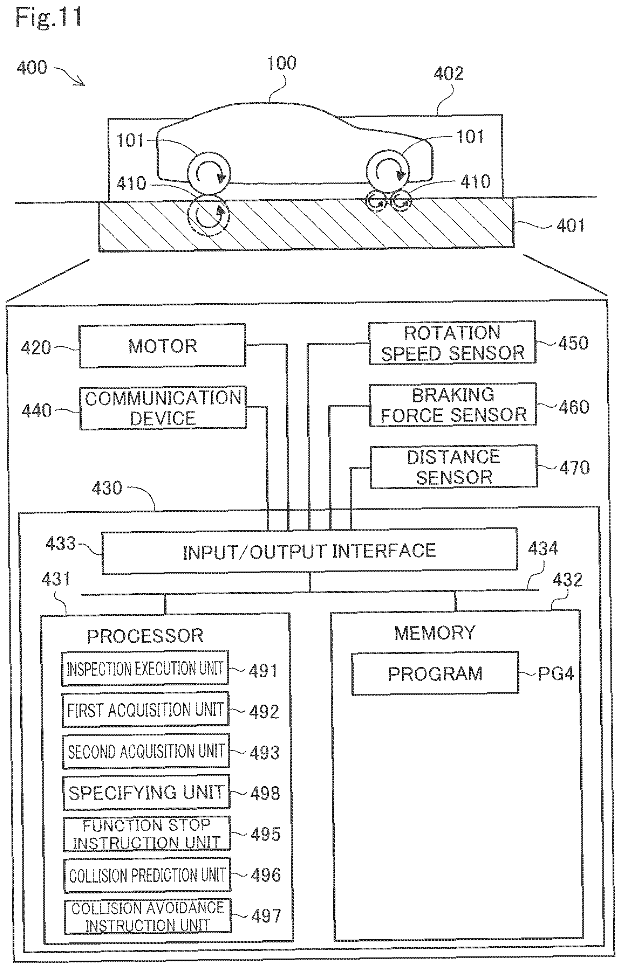

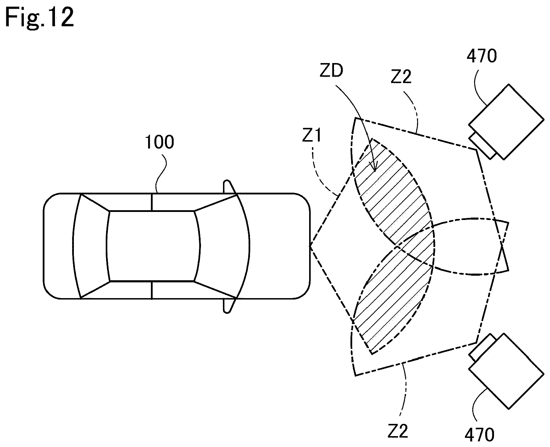

FIG. 11 is an explanatory view illustrating a configuration of the inspection device 400 according to the third embodiment. FIG. 12 is an explanatory view schematically illustrating an overlapping portion ZD of a detection range Z1 of the obstacle sensor 140 and detection ranges Z2 of the distance sensors 470. The third embodiment differs from the first embodiment in that, instead of the comparison unit 494, a specifying unit 498 is provided to the inspection device 400. The other components are the same as those in the first embodiment unless otherwise specified in particular.

As illustrated in FIG. 11, the processor 431 of the inspection control device 430 functions as the inspection execution unit 491, the first acquisition unit 492, the second acquisition unit 493, the specifying unit 498, the function stop instruction unit 495, the collision prediction unit 496, and the collision avoidance instruction unit 497 by executing the computer program PG4 stored in advance in the memory 432. In the present embodiment, the first acquisition unit 492 acquires the detection range Z1 of the obstacle sensor 140. The first acquisition unit 492 can acquire a detection result of the obstacle sensor 140, and acquire the detection range Z1 of the obstacle sensor 140 from the detection result of the obstacle sensor 140. The second acquisition unit 493 acquires the detection ranges Z2 of the distance sensors 470. The second acquisition unit 493 may acquire the detection results of the distance sensors 470, and acquire the detection ranges Z2 of the distance sensors 470 from the detection results of the distance sensors 470. The specifying unit 498 specifies the overlapping portion ZD of the detection range Z1 of the obstacle sensor 140 and the detection ranges Z2 of the distance sensors 470 using the detection range Z1 of the obstacle sensor 140 acquired by the first acquisition unit 492, and the detection ranges Z2 of the distance sensors 470 acquired by the second acquisition unit 493. In FIG. 12, the overlapping portion ZD is indicated by a hatching. In the present embodiment, the function stop instruction unit 495 disables execution of the automatic brake of the vehicle 100 that uses the detection result of the obstacle sensor 140 at the overlapping portion ZD. The function stop instruction unit 495 does not disable execution of the automatic brake of the vehicle 100 that uses the detection result of the obstacle sensor 140 at other than the overlapping portion ZD. In this regard, the function stop instruction unit 495 may disable execution of the automatic brake of the vehicle 100 that uses the detection result of the obstacle sensor 140 at other than the overlapping portion ZD.

According to the system 10 according to the above-described present embodiment, when the vehicle 100 enters the inspection device 400, execution of the automatic brake of the vehicle 100 that uses the detection result of the obstacle sensor 140 is disabled at the overlapping portion ZD, so that it is possible to suppress obstruction of entry of the vehicle 100 into the inspection device 400. Furthermore, in the present embodiment, when the vehicle 100 runs in the inspection device 400, it is possible to avoid collision of the vehicle 100 and the inspection device 400 by causing the vehicle 100 to perform emergency stop using the detection results of the distance sensors 470 of the inspection device 400. Furthermore, in the present embodiment, the automatic brake of the vehicle 100 that uses the detection result of the obstacle sensor 140 can be executed at other than the overlapping portion ZD, so that, when the vehicle 100 enters blind spots of the distance sensors 470, it is possible to avoid collision of the vehicle 100 and the inspection device 400 by the automatic brake that uses the detection result of the obstacle sensor 140.

### D. Fourth Embodiment:

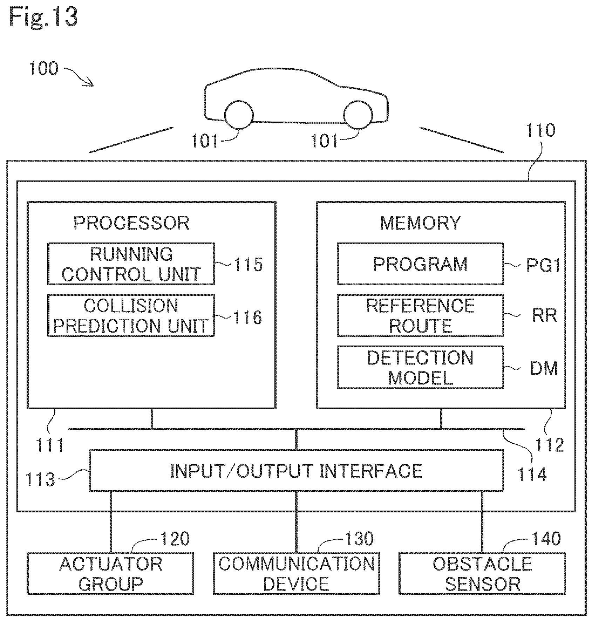

FIG. 13 is an explanatory view illustrating a configuration of the vehicle 100 according to the fourth embodiment. The fourth embodiment differs from the first embodiment in that the system 10 does not include the server device 200, and the vehicle 100 does not run under remote control of the server device 200 but runs under autonomous control of the vehicle 100. The other components are the same as those in the first embodiment unless otherwise specified in particular.

In the present embodiment, in the memory 112 of the vehicle control device 110, a reference route RR and a detection model DM are stored in advance. The communication device 130 can communicate with the external sensor 300 and the inspection device 400 by wireless communication. The processor 111 functions as the running control unit 115 and the collision prediction unit 116 by executing the computer program PG1 stored in advance in the memory 112. In the present embodiment, the running control unit 115 generates a running control signal by itself to cause the vehicle 100 to run.

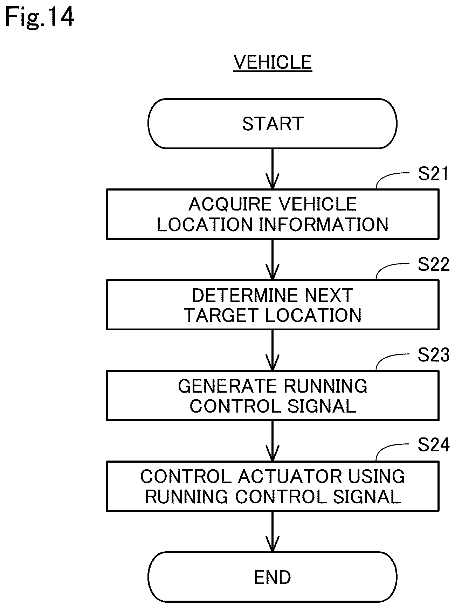

FIG. 14 is a flowchart illustrating a processing procedure of running control of the vehicle 100 according to the fourth embodiment. In step S21, the processor 111 of the vehicle control device 110 acquires vehicle location information using detection result output from the camera as an external sensor 300. In step S22, the processor 111 determines a target location to which the vehicle 100 is to move next. In step S23, the processor 111 generates a running control signal for causing the vehicle 100 to run to the determined target location. In step S24, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator group 120 in a predetermined cycle. According to the running control in the present embodiment, it is possible to cause the vehicle 100 to run by autonomous control without controlling the vehicle 100 remotely using the server device 200.

The system 10 according to the above-described present embodiment can inspect the vehicle 100 without remotely controlling the vehicle 100 using the server device 200. Furthermore, similarly to the first embodiment, in the present embodiment, the inspection device 400 executes automatic brake prohibition control, so that it is possible to suppress obstruction of entry of the vehicle 100 into the narrow route NR.

### F. Other Embodiments:

(E1) In each of the above embodiments, the inspection device 400 may not be provided with the collision prediction unit 496 and the collision avoidance instruction unit 497. Even in this case, it is possible to suppress the automatic brake of the vehicle 100 that uses the obstacle sensor 140 from excessively frequently activating.

(E2) In each of the above embodiments, the collision avoidance instruction unit 497 causes the vehicle 100 to execute a collision avoidance behavior when collision of the vehicle 100 and the inspection device 400 is predicted. By contrast with this, in a case where, for example, the inspection device 400 includes a movable part such as a robot arm, the collision avoidance instruction unit 497 may cause the movable part of the inspection device 400 to execute the collision avoidance behavior when collision of the vehicle 100 and the inspection device 400 is predicted.

(E3) In each of the above embodiments, the function stop instruction unit 495 may prohibit activation of the automatic brake by a method other than overwriting of an automatic brake necessity/unnecessity determination result. For example, the function stop instruction unit 495 may prohibit activation of the automatic brake by temporarily stopping the function of the collision prediction unit 116 of the vehicle 100.

(E4) In the above first to third embodiments, the server device 200 and the inspection control device 430 may be integrated. Furthermore, in the first to second embodiments, the first acquisition unit 492, the second acquisition unit 493, and the comparison unit 494 may be provided to the server device 200, and the function stop instruction unit 495 of the inspection control device 430 may acquire from the server device 200 a comparison result of the reliability of the obstacle sensor 140 and the reliabilities of the distance sensors 470. Furthermore, in the third embodiment, the first acquisition unit 492, the second acquisition unit 493, and the specifying unit 498 may be provided to the server device 200, and the function stop instruction unit 495 of the inspection control device 430 may acquire from the server device 200 the overlapping portion ZD of the detection range Z1 of the obstacle sensor 140 and the detection ranges Z2 of the distance sensors 470.

(E5) In each of the above embodiments, the external sensor 300 is not limited to the camera, and may be, for example, a distance measurement device. The distance measurement device may be, for example, a Light Detection And Ranging (LiDAR). In this case, a detection result output from the external sensor 300 may be three-dimensional point cloud data that indicates the vehicle 100. In this case, the server device 200 and the vehicle 100 may acquire vehicle position information by template matching that uses three-dimensional point cloud data that is a detection result, and reference point cloud data prepared in advance. Note that, in this case, the area information AD may not be stored in the memory 432 of the inspection control device 430.

(E6) In the above first to third embodiments, the server device 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server device 200 may acquire vehicle location information, determine a target location to which the vehicle 100 is to move next, and generate a route from a current location of the vehicle 100 indicated by the acquired vehicle location information to the target location. The server device 200 may generate a route to the target location between the current location and a destination or generate a route to the destination. The server device 200 may transmit the generated route to the vehicle 100. The vehicle 100 may generate a running control signal in such a manner as to cause the vehicle 100 to run along the route received from the server device 200 and control the actuator group 120 using the generated running control signal.
(2) The server device 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server device 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(E7) In the above fourth embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(E8) In the above fourth embodiment, the vehicle 100 acquires vehicle location information using detection result from the external sensor 300. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control an actuator group 120 of the vehicle 100 using the generated running control signal. In this case, the vehicle 100 is capable of running without using any detection result from an external sensor 300. The vehicle 100 may acquire target arrival time or traffic congestion information from outside the vehicle 100 and reflect the target arrival time or traffic congestion information in at least one of the route and the running control signal.

(E9) In the above first to third embodiments, the server device 200 automatically generates a running control signal to be transmitted to the vehicle 100. By contrast, the server device 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server device 200 through wire communication or wireless communication, for example, and the server device 200 may generate a running control signal responsive to the operation on the operating device.

(E10) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle control device 110 and the actuator group 120. More specifically, in order to fulfill three functions including "run," "turn," and "stop" by unmanned driving, the actuator group 120 may include a driving device, a steering device and a braking device. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(E11) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(E12) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(E13) In each of the above embodiments, some or all of the functions and processes implemented by software may be implemented by hardware. Also, some or all of the functions and processes implemented by hardware may be implemented by software. As hardware for implementing the various functions in each of the above embodiments, various circuits such as integrated circuits and discrete circuits may be used.

## Claims

1. A system (10) comprising:
a first acquisition unit (492) configured to acquire reliability of a first sensor (140), wherein the first sensor is a sensor mounted on a vehicle (100), wherein the first sensor detects the distance between the vehicle and the obstacle, wherein the vehicle having a collision avoidance function of avoiding collision against an obstacle based on a distance between the vehicle and the obstacle;
**characterized in that**
a second acquisition unit (493) configured to acquire reliability of a second sensor (470), wherein the second sensor is a sensor disposed outside the vehicle, wherein the second sensor detects a distance between the vehicle and an inspection device (400) that inspects the vehicle; and
a function stop instruction unit (495) configured to transmit to the vehicle an instruction of stopping the collision avoidance function that uses a detection result of the first sensor, when a predetermined condition including that the reliability of the first sensor is lower than the reliability of the second sensor is satisfied.

2. The system according to claim 1, further comprising:
a collision prediction unit (496) configured to predict collision of the vehicle and the inspection device using a detection result of the second sensor; and
a collision avoidance instruction unit (497) configured to transmit an instruction of causing at least one of the vehicle and the inspection device to execute a collision avoidance behavior of avoiding the collision of the vehicle and the inspection device, when the collision prediction unit predicts that the vehicle and the inspection device collide.

3. The system according to claim 1,
wherein the function stop instruction unit configured to stop the collision avoidance function that uses the detection result of the first sensor by overwriting a necessity/unnecessity determination result of the collision avoidance behavior of the vehicle that uses the first sensor with a necessity/unnecessity determination result of the collision avoidance behavior that uses the second sensor.

4. A system (10) comprising:
a first acquisition unit (492) configured to acquire a detection range (Z1) of a first sensor (140), wherein the first sensor is a sensor mounted on a vehicle, wherein the first sensor detects the distance between the vehicle and the obstacle, wherein the vehicle having a collision avoidance function of avoiding collision against an obstacle based on a distance between the vehicle and the obstacle;
a second acquisition unit (493) configured to acquire a detection range (Z2) of a second sensor (470), wherein the second sensor is a sensor disposed outside the vehicle, wherein the second sensor detects a distance between the vehicle and an inspection device (400) that inspects the vehicle; and
a function stop instruction unit (495) configured to transmit to the vehicle an instruction of stopping the collision avoidance function that uses a detection result of the first sensor obtained by detecting an overlapping portion (ZD) of the detection range of the first sensor included in the detection range of the second sensor, when a predetermined condition including that the overlapping portion has been specified is satisfied.

5. The system according to claim 4, further comprising:
a collision prediction unit (496) configured to predict collision of the vehicle and the inspection device using a detection result of the second sensor; and
a collision avoidance instruction unit (497) configured to transmit an instruction of causing at least one of the vehicle and the inspection device to execute a collision avoidance behavior of avoiding the collision of the vehicle and the inspection device, when the collision prediction unit predicts that the vehicle and the inspection device collide.

6. The system according to claim 4,
wherein the function stop instruction unit configured to stop the collision avoidance function that uses the detection result of the first sensor by overwriting a necessity/unnecessity determination result of the collision avoidance behavior of the vehicle that uses the first sensor with a necessity/unnecessity determination result of the collision avoidance behavior that uses the second sensor.

7. A method comprising:
acquiring reliability of a first sensor (140), wherein the first sensor is a sensor mounted on a vehicle (100), wherein the first sensor detects the distance between the vehicle and the obstacle, wherein the vehicle having a collision avoidance function of avoiding collision against an obstacle based on a distance between the vehicle and the obstacle;
**characterized in that**
acquiring reliability of a second sensor (470), wherein the second sensor is a sensor disposed outside the vehicle, wherein the second sensor detects a distance between the vehicle and an inspection device (400) that inspects the vehicle; and
stopping the collision avoidance function that uses a detection result of the first sensor, when a predetermined condition including that the reliability of the first sensor is lower than the reliability of the second sensor is satisfied.

## Patentansprüche

1. System (10), umfassend:
eine erste Erfassungseinheit (492), die dazu konfiguriert ist, die Zuverlässigkeit eines ersten Sensors (140) zu erfassen, wobei der erste Sensor ein an einem Fahrzeug (100) montierter Sensor ist, wobei der erste Sensor den Abstand zwischen dem Fahrzeug und dem Hindernis erkennt, wobei das Fahrzeug eine Kollisionsvermeidungsfunktion aufweist, um eine Kollision mit einem Hindernis auf Grundlage eines Abstands zwischen dem Fahrzeug und dem Hindernis zu vermeiden;
**dadurch gekennzeichnet, dass**
eine zweite Erfassungseinheit (493) dazu konfiguriert ist, die Zuverlässigkeit eines zweiten Sensors (470) zu erfassen, wobei der zweite Sensor ein außerhalb des Fahrzeugs angeordneter Sensor ist, wobei der zweite Sensor einen Abstand zwischen dem Fahrzeug und einer Prüfvorrichtung (400) erkennt, die das Fahrzeug prüft; und
eine Anweisungseinheit (495) zum Stoppen einer Funktion dazu konfiguriert ist, an das Fahrzeug eine Anweisung zum Stoppen der Kollisionsvermeidungsfunktion zu übertragen, die ein Erkennungsergebnis des ersten Sensors verwendet, wenn eine vorbestimmte Bedingung erfüllt ist, die beinhaltet, dass die Zuverlässigkeit des ersten Sensors geringer ist als die Zuverlässigkeit des zweiten Sensors.

2. System nach Anspruch 1, ferner umfassend:
eine Kollisionsvorhersageeinheit (496), die dazu konfiguriert ist, eine Kollision des Fahrzeugs mit der Prüfvorrichtung unter Verwendung eines Erkennungsergebnisses des zweiten Sensors vorherzusagen; und
eine Kollisionsvermeidungsanweisungseinheit (497), die dazu konfiguriert ist, eine Anweisung zu übertragen, die bewirkt, dass wenigstens eines des Fahrzeugs und der Prüfvorrichtung ein Kollisionsvermeidungsverhalten ausführt, um eine Kollision des Fahrzeugs mit der Prüfvorrichtung zu vermeiden, wenn die Kollisionsvorhersageeinheit vorhersagt, dass das Fahrzeug und die Prüfvorrichtung kollidieren werden.

3. System nach Anspruch 1,
wobei die Anweisungseinheit zum Stoppen einer Funktion dazu konfiguriert ist, die Kollisionsvermeidungsfunktion, die das Erkennungsergebnis des ersten Sensors verwendet, durch Überschreiben eines Notwendigkeits-/Nichtnotwendigkeitsbestimmungsergebnisses des Kollisionsvermeidungsverhaltens des Fahrzeugs zu stoppen, das den ersten Sensor mit einem Notwendigkeits-/Nichtnotwendigkeitsbestimmungsergebnis des Kollisionsvermeidungsverhaltens verwendet, der den zweiten Sensor verwendet.

4. System (10), umfassend:
eine erste Erfassungseinheit (492), die dazu konfiguriert ist, einen Erkennungsbereich (Z1) eines ersten Sensors (140) zu erfassen, wobei der erste Sensor ein an einem Fahrzeug montierter Sensor ist, wobei der erste Sensor den Abstand zwischen dem Fahrzeug und dem Hindernis erkennt, wobei das Fahrzeug eine Kollisionsvermeidungsfunktion aufweist, um eine Kollision mit einem Hindernis auf Grundlage eines Abstands zwischen dem Fahrzeug und dem Hindernis zu vermeiden;
eine zweite Erfassungseinheit (493), die dazu konfiguriert ist, einen Erkennungsbereich (Z2) eines zweiten Sensors (470) zu erfassen, wobei der zweite Sensor ein außerhalb des Fahrzeugs angeordneter Sensor ist, wobei der zweite Sensor einen Abstand zwischen dem Fahrzeug und einer Prüfvorrichtung (400) erkennt, die das Fahrzeug prüft; und
eine Anweisungseinheit (495) zum Stoppen einer Funktion, die dazu konfiguriert ist, an das Fahrzeug eine Anweisung zum Stoppen der Kollisionsvermeidungsfunktion zu übertragen, die ein Erkennungsergebnis des ersten Sensors, das erhalten wurde, indem ein Überlappungsabschnitt (ZD) des Erkennungsbereichs des ersten Sensors, der in dem Erkennungsbereich des zweiten Sensors enthalten ist, verwendet, wenn eine vorbestimmte Bedingung erfüllt ist, die beinhaltet, dass der Überlappungsabschnitt spezifiziert worden ist.

5. System nach Anspruch 4, ferner umfassend:
eine Kollisionsvorhersageeinheit (496), die dazu konfiguriert ist, eine Kollision des Fahrzeugs mit der Prüfvorrichtung unter Verwendung eines Erkennungsergebnisses des zweiten Sensors vorherzusagen; und
eine Kollisionsvermeidungsanweisungseinheit (497), die dazu konfiguriert ist, eine Anweisung zu übertragen, die bewirkt, dass wenigstens eines des Fahrzeugs und der Prüfvorrichtung ein Kollisionsvermeidungsverhalten ausführt, um die Kollision des Fahrzeugs mit der Prüfvorrichtung zu vermeiden, wenn die Kollisionsvorhersageeinheit vorhersagt, dass das Fahrzeug und die Prüfvorrichtung kollidieren werden.

6. System nach Anspruch 4,
wobei Anweisungseinheit zum Stoppen einer Funktion dazu konfiguriert ist, die Kollisionsvermeidungsfunktion, die das Erkennungsergebnis des ersten Sensors verwendet, durch Überschreiben eines Notwendigkeits-/Nichtnotwendigkeitsbestimmungsergebnisses des Kollisionsvermeidungsverhaltens des Fahrzeugs, das den ersten Sensor verwendet, mit einem Notwendigkeits-/Nichtnotwendigkeitsbestimmungsergebnis des Kollisionsvermeidungsverhaltens zu stoppen, das den zweiten Sensor verwendet.

7. Verfahren, umfassend:
Erfassen der Zuverlässigkeit eines ersten Sensors (140), wobei der erste Sensor ein an einem Fahrzeug (100) montierter Sensor ist, wobei der erste Sensor den Abstand zwischen dem Fahrzeug und dem Hindernis erkennt, wobei das Fahrzeug eine Kollisionsvermeidungsfunktion aufweist, um eine Kollision mit einem Hindernis auf Grundlage eines Abstands zwischen dem Fahrzeug und dem Hindernis zu vermeiden;
**dadurch gekennzeichnet, dass**
Erfassen einer Zuverlässigkeit eines zweiten Sensors (470), wobei der zweite Sensor ein außerhalb des Fahrzeugs angeordneter Sensor ist, wobei der zweite Sensor einen Abstand zwischen dem Fahrzeug und einer Prüfvorrichtung (400) erkennt, die das Fahrzeug prüft; und
Stoppen der Kollisionsvermeidungsfunktion, die ein Erkennungsergebnis des ersten Sensors verwendet, wenn eine vorbestimmte Bedingung erfüllt ist, die beinhaltet, dass die Zuverlässigkeit des ersten Sensors geringer ist als die Zuverlässigkeit des zweiten Sensors.

## Revendications

1. Système (10) comprenant :
une première unité d'acquisition (492) configurée pour acquérir la fiabilité d'un premier capteur (140), ledit premier capteur étant un capteur monté sur un véhicule (100), ledit premier capteur détectant la distance entre le véhicule et un obstacle, ledit véhicule ayant une fonction d'évitement de collision consistant à éviter une collision avec un obstacle compte tenu de la distance entre le véhicule et l'obstacle ;
**caractérisé par** :
une deuxième unité d'acquisition (493) configurée pour acquérir la fiabilité d'un deuxième capteur (470), ledit deuxième capteur étant un capteur disposé à l'extérieur du véhicule, et ledit deuxième capteur détectant une distance entre le véhicule et un dispositif d'inspection (400) qui inspecte le véhicule, et
une unité d'instruction d'arrêt de fonction (495) configurée pour transmettre au véhicule une instruction d'arrêt de la fonction d'évitement de collision qui utilise un résultat de détection du premier capteur, lorsqu'une condition prédéterminée - dont le fait que la fiabilité du premier capteur est inférieure à la fiabilité du deuxième capteur - est satisfaite.

2. Système selon la revendication 1, comprenant en outre :
une unité de prédiction de collision (496) configurée pour prédire une collision du véhicule et du dispositif d'inspection en utilisant un résultat de détection du deuxième capteur, et
une unité d'instruction d'évitement de collision (497) configurée pour transmettre une instruction visant à amener le véhicule et/ou le dispositif d' inspection à exécuter une manœuvre d'évitement de collision consistant à éviter la collision du véhicule et du dispositif d'inspection, lorsque l'unité de prédiction de collision prédit que le véhicule et le dispositif de collision vont entrer en collision.

3. Système selon la revendication 1,
dans lequel l'unité d'instruction d'arrêt de fonction est configurée pour arrêter la fonction d'évitement de collision qui utilise le résultat de détection du premier capteur en écrasant un résultat de détermination de nécessité/non-nécessité de manœuvre d'évitement de collision du véhicule qui utilise le premier capteur par un résultat de détermination de nécessité/non-nécessité de manœuvre d'évitement de collision qui utilise le deuxième capteur.

4. Système (10) comprenant :
une première unité d'acquisition (492) configurée pour acquérir une plage de détection (Z1) d'un premier capteur (140), ledit premier capteur étant un capteur monté sur un véhicule, ledit premier capteur détectant la distance entre le véhicule et un obstacle, ledit véhicule ayant une fonction d'évitement de collision consistant à éviter une collision avec un obstacle compte tenu de la distance entre le véhicule et l'obstacle ;
une deuxième unité d'acquisition (493) configurée pour acquérir une plage de détection (Z2) d'un deuxième capteur (470), ledit deuxième capteur étant un capteur disposé à l'extérieur du véhicule, ledit deuxième capteur détectant une distance entre le véhicule et un dispositif d'inspection (400) qui inspecte le véhicule ; et
une unité d'instruction d'arrêt de fonction (495) configurée pour transmettre au véhicule une instruction d'arrêt de la fonction d'évitement de collision qui utilise un résultat de détection du premier capteur obtenu par détection d'une partie de chevauchement (ZD) de la plage de détection du premier capteur présente dans la plage de détection du deuxième capteur, lorsqu'une condition prédéterminée - dont le fait que la partie de chevauchement a été spécifiée - est satisfaite.

5. Système selon la revendication 4, comprenant en outre :
une unité de prédiction de collision (496) configurée pour prédire une collision du véhicule et du dispositif d'inspection en utilisant un résultat de détection du deuxième capteur ; et
une unité d'instruction d'évitement de collision (497) configurée pour transmettre une instruction visant à amener le véhicule et/ou le dispositif d' inspection à exécuter une manœuvre d'évitement de collision consistant à éviter la collision du véhicule et du dispositif d'inspection, lorsque l'unité de prédiction de collision prédit que le véhicule et le dispositif d'inspection vont entrer en collision.

6. Système selon la revendication 4,
dans lequel l'unité d'instruction d'arrêt de fonction est configurée pour arrêter la fonction d'évitement de collision qui utilise le résultat de détection du premier capteur en écrasant un résultat de détermination de nécessité/non-nécessité de manœuvre d'évitement de collision du véhicule qui utilise le premier capteur par un résultat de détermination de nécessité/non-nécessité de manœuvre d'évitement de collision qui utilise le deuxième capteur.

7. Procédé comprenant :
l'acquisition de la fiabilité d'un premier capteur (140), ledit premier capteur étant un capteur monté sur un véhicule (100), ledit premier capteur détectant la distance entre le véhicule et un obstacle, ledit véhicule ayant une fonction d'évitement de collision consistant à éviter la collision avec un obstacle compte tenu d'une distance entre le véhicule et l'obstacle ;
**caractérisé par**
l'acquisition de la fiabilité d'un deuxième capteur (470), ledit deuxième capteur étant un capteur disposé à l'extérieur du véhicule, ledit deuxième capteur détectant la distance entre le véhicule et un dispositif d'inspection (400) qui inspecte le véhicule ; et
l'arrêt de la fonction d'évitement de collision qui utilise un résultat de détection du premier capteur, lorsqu'une condition prédéterminée - dont le fait que la fiabilité du premier capteur est inférieure à la fiabilité du deuxième capteur - est satisfaite.
